# EUROPÄISCHE PATENTSCHRIFT

(11) **EP 1 283 929 B1**
(45) Veröffentlichungstag und Bekanntmachung des Hinweises auf die Patenterteilung: **03.01.2007**
(21) Anmeldenummer: 01940345.0
(22) Anmeldetag: 19.04.2001
(51) Int. Cl.: E04D 5/12

(54) **DACHABDICHTUNGSBAHN**
ROOF SEALING WEB
BANDE D'ETANCHEIFICATION POUR TOIT

(30) Priorität: 25.05.2000 DE 20009382 U
(43) Veröffentlichungstag der Anmeldung: 19.02.2003
(73) Patentinhaber: ICOPAL GmbH, 59368 Werne (DE)
(72) Erfinder: GRAAE, Niels, 59368 Werne (DE); BIRKNER, Christian, F-57380 Faulquemont (FR)
(74) Vertreter: Prietsch, Reiner
(86) Internationale Anmeldenummer: PCT/EP2001/004471
(87) Internationale Veröffentlichungsnummer: WO 2001/090506

(56) Entgegenhaltungen:
- EP-A- 0 203 609
- DE-A- 19 716 543
- FR-A- 2 457 767
- FR-A- 2 706 506

## Beschreibung

Die Erfindung betrifft eine Dachabdichtungsbahn, bestehend zumindest aus einer Trägerschicht, zumindest auf einer Seite der Trägerschicht angeordneten, voneinander beabstandeten Streifen aus bituminösem Material, die voneinander durch eine Abstreuschicht getrennt sind, sowie einer das bituminöse Material überdeckenden schmelzbaren Folie.

Relevante Dachabdichdungsbahnen sind beispielsweise aus den Dokumenten EP-A-0 203 609 und FR-A-2 457 767 zu entnehmen.

Bei bekannten Dachabdichtungsbahnen dieser Gattung ist die schmelzbare Folie auf der ganzen Fläche der die zum Verkleben der Bahnen dienenden Streifen aus bituminösen Material aufweisenden Seite der Dachabdichtungsbahn angeordnet. Dies hat zur Folge, daß sich im Bereich der Abstreuung zwischen den einzelnen Streifen aus bituminösen Material zwischen der Folie und der Abstreuung z.B. aus Sand Feuchtigkeit ansammeln kann. Bei der Verarbeitung der Dachabdichtungsbahn läßt sich außerdem die Folie in diesem Bereich schlecht abflämmen, zumal die Folie nur lose über der Abstreuung liegt.

Die bituminösen Streifen an der Unterseite der Dachabdichtungsbahn können in Längserstreckung der Abdichtungsbahn unterbochen sein, so daß ein kontrollierter Dampfdruckausgleich gewährleistet ist. Die Unterbrechungen eines Streifens sind dabei gegenüber denjenigen des benachbarten Streifens versetzt.

Die Streifen aus bituminösem Material bestehen beispielsweise aus wärmeaktivierbarem selbstklebendem Bitumen (WSKB) . Das bekannte eingesetzte Bitumen hat jedoch den Nachteil, daß die Streifen nach der Verklebung der Dachabdichtungsbahn bei starker Erwärmung durch Sonneneinstrahlung erweichen und verlaufen können. Dies kann wiederum zur Bildung von Blasen unter der Dachabdichtungsbahn führen.

Der Erfindung liegt die Aufgabe zugrunde, eine den vorstehend genannten Problemen Rechnung tragende Dachabdichtungsbahn der einleitend genannten Gattung zu schaffen.

Diese Aufgabe ist erfindungsgemäß durch eine Abdichtungsbahn gemäß dem Anspruch 1 gelöst.

Die Streifen aus bituminösem Material eine Penetrationstiefe zwischen etwa 120 und 170 und einen Erweichungspunkt zwischen etwa 100 °C bis 110 °C haben.

Die Penetrationstiefe bezieht sich auf die DIN 52 010, ist jedoch hier bei einer Temperatur von 50 °C bestimmt. Die Penetrationstiefe drückt aus, wie tief eine Nadel innerhalb von fünf Sekunden in das bituminöse Material eindringt. Die Penetrationstiefe ist, wie üblich, in Einheiten von 1/10 mm angegeben.

Der angegebene Erweichungspunkt ist der nach DIN 52 011 gemessene Erweichungspunkt Ring und Kugel (R. u. K.).

Das bituminöse Material besteht z.B. zu ca. 65% aus Destillationsbitumen, zu ca. 15% aus Oxidationsbitumen, zu ca. 10% aus Blockpolymerstyrenbutadien und zu ca. 10% aus Ölharzen.

Die Trägerschicht selbst kann wie üblich mehrlagig sein. Z.B. besteht die äußerste Lage der Trägerschicht an der Oberseite und diejenige an der Unterseite der Dachabdichtungsbahn aus einer Sandabstreuung.

Bituminöse Streifen mit den vorstehend angegebenen Materialeigenschaften haben den Vorteil, daß sie auch bei starker Sonneneinstrahlung formstabil bleiben. Zudem erlauben diese Materialeigenschaften ein schnelles Verflüssigen der Streifen und mithin eine bequeme Verarbeitung der Dachabdichtungsbahn.

Die schmelzbare Folie besteht aus nicht miteinander verbundenen Streifen, die parallel zu den Streifen aus bituminösem Material ausgerichtet sind. Dies hat den Vorteil, daß sich zwischen der Folie und der Trägerschicht keine Feuchtigkeit ansammelt, da diese über die wenigstens kleinen Zwischenräume zwischen den einzelnen Streifen entweichen kann. Damit ist gewährleistet, daß die Folie beim Verschweißen der Dachabdichtungsbahn problemlos wegschmilzt.

Die Streifen aus bituminösen Material können nur an der Unterseite, an beiden Seiten oder auch nur an der Oberseite der Dachabdichtungsbahn angeordnet sein. Im letzteren Fall liegt aber stets auch bituminöses Material an der Unterseite der Bahn, dann aber nicht streifenförmig, sondern z.B. vollflächig. Bei vollflächiger Bedeckung der Unterseite mit bituminösen Material liegt die schmelzbare Folie einstückig über demselben. Diese Ausführungsform bietet sich an, wenn die Bahn zur Verlegung auf Trapezblechen bestimmt ist, denn so kann eine maximale Klebefläche zwischen Trapezblech und Bahn erreicht werden.

Insbesondere wenn die Streifen aus bituminösem Material an der Unterseite der Dachabdichtungsbahn angeordnet sind, sind die Folienstreifen zweckmäßig durch eine Schnittlinie voneinander getrennt (Anspruch 2). Feuchtigkeit kann dann über den so entstandenen Schlitz, der zweckmäßig werksseitig eingebracht ist, austreten.

Insbesondere wenn die Streifen aus bituminösem Material auch an der Oberseite der Dachabdichtungsbahn angeordnet sind, ist es zweckmäßig, daß die Folienstreifen im wesentlichen nur das bituminöse Material überdecken (Anspruch 3). Beispielsweise kann eine zunächst auf der gesamten Bahnfläche aufgebrachte Folie in den Bereichen zwischen den Streifen werkseitig, z.B. mittels Heißluft, entfernt worden sein. In diesen Bereichen liegt dann die Abstreuung der Trägerschicht frei.

Sämtliche an der Oberseite der Dachabdichtungsbahn angeordneten Streifen aus bituminösem Material können sich über die gesamte Länge der Dachabdichtungsbahn erstrecken (Anspruch 4). Dadurch steht eine gegenüber unterbrochenen Streifen vergrößerte Klebefläche zur Verfügung. Ein Dampfdruckausgleich ist hier wegen der im verarbeiteten Zustand der Bahn darüberliegenden Schicht, die meist eine plattenförmige Wärmedämmung ist, nicht von Bedeutung.

Hingegen sind an der Unterseite der Dachabdichtungsbahn angeordnete Streifen aus bituminösem Material zweckmäßig in Längsrichtung der Dachabdichtungsbahn unterbrochen (Anspruch 5). Dadurch können sich nach dem Verlegen der Dachabdichtungsbahn keine Blasen bilden. Es kann so ein Druckausgleich über die gesamte Dachfläche erfolgen. Die am Rand der Dachabdichtungsbahn liegenden Streifen sind auch an der Unterseite der Bahn durchgängig ausgebildet.

Um eine gute Verklebung der Dachabdichtungsbahn zu erreichen, bedecken die bituminösen Streifen an der jeweilgen Bahnseite mindestens 50 % der Gesamtfläche der Bahn (Anspruch 6).

Die Breite der an einer Seite der Bahn angeordneten Streifen kann verschieden sein (Anspruch 7). Insbesondere kann eine Bahnseite Streifen mit einer Breite von 2 bis 2,5 cm und solche mit einer Breite von ca. 8 cm aufweisen. Letztere können beispielsweise zur Verschweißung der Bahn mit einer sich mit dieser überlappenden Bahn dienen, so daß dann eine durchgängige Schweißnaht mit einer Breite von ca. 8 cm entsteht. Insbesondere an der Oberseite der Bahn angeordnete Streifen können aber auch jeweils die gleiche Breite, z.B. 8 cm (Standardnahtbreite zwischen zwei aneinandergrenzenden sich überlappenden Bahnen), aufweisen.

Die Oberfläche der Streifen aus bituminösem Material kann gerillt sein (Anspruch 8).

Die Folie kann genadelt sein (Anspruch 9).

Ausführungsbeispiele der Dachabdichtungsbahn nach der Erfindung sind in der Zeichnung schematisch vereinfacht dargestellt. Es zeigt:
- Fig. 1: die Oberseite einer Dachabdichtungsbahn;
- Fig. 2: die Dachabdichtungsbahn im Querschnitt;
- Fig. 2a und 2b: die umrandeten Bereiche in Fig. 2 in einer vergrößerten Darstellung;
- Fig. 3: die Unterseite der Dachabdichtungsbahn;
- Fig. 4 bis 6: auf einem Trapezblech verlegte Dachabdichtungsbahnen.

Die in der Zeichnung dargestellte Dachabdichtungsbahn besteht aus einer mehrlagigen Trägerschicht, die u.a. eine Trägereinlage 4 aus z.B. Polyester, Glasfaser, Aluminium in Form von Vlies, eines Gitters oder Folie oder einer Kombination der vorgenannten Materialien und beidseits eine Sandabstreuung 3 bzw. 3' aufweist. An der Oberseite der Dachabdichtungsbahn sind Streifen 2, an der Unterseite der Dachabdichtungsbahn Streifen 2', jeweils aus bituminösem Material, bevorzugt aus WSKB, aufgebracht, die zum Verkleben der Dachabdichtungsbahn dienen und in Längserstreckung (Pfeil P) der Dachabdichtungsbahn verlaufen.

Das bituminöse Material der Streifen 2, 2' hat eine Nadelpenetrationstiefe von etwa 120 bis 170 bei 50 °C (gemäß dem Verfahren nach DIN 52 010, bei dem die Messung jedoch bei einer Temperatur von 25 °C durchgeführt wird) sowie einen Erweichungspunkt R. u. K. zwischen 100 °C und 110 °C (DIN 52 011). Diese Materialeigenschaften gewährleisten eine hohe Formstabilität der bituminösen Streifen nach dem Verlegen der Dachabdichtungsbahn auch bei Einwirkung hoher Temperaturen, z.B. bei starker Sonneneinstrahlung.

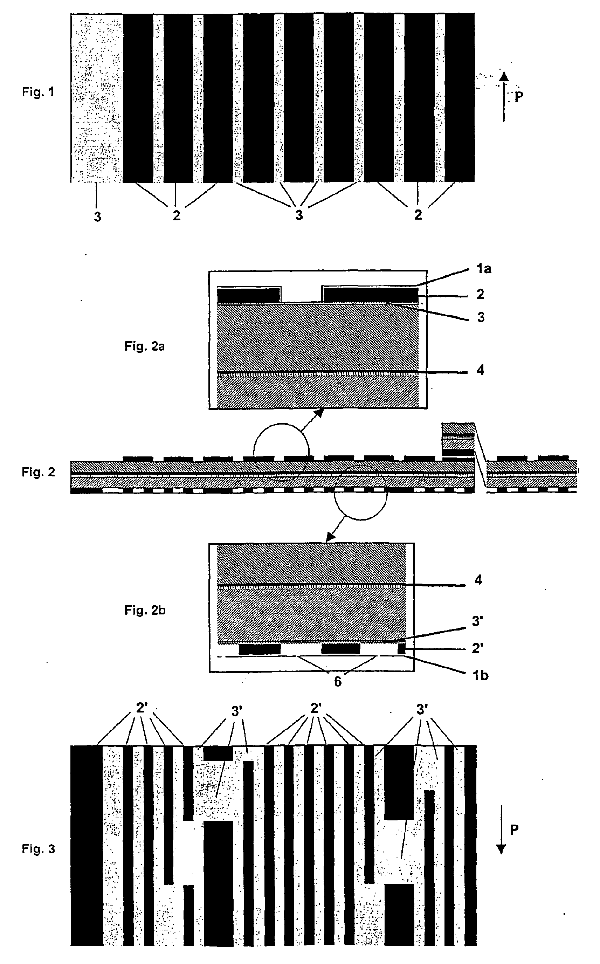

Die bituminösen Streifen 2' an der Unterseite der Dachabdichtungsbahn sind in Längserstreckung (Pfeil P) der Dachabdichtungsbahn unterbrochen (vgl. Fig. 3) und von einer Schmelzklebefolie 1b überdeckt. Diese weist im Bereich zwischen den einzelnen bituminösen Streifen 2' im Bereich der nicht durch bituminösen Material bedeckten Abstreuung jeweils einen Schnitt 6 auf, ist mithin streifenförmig ausgebildet. Damit kann sich gegebenenfalls zwischen der Schmelzklebefolie 1b und der Sandabstreuung 3' ansammelnde Feuchtigkeit entweichen.

Die bituminösen Streifen 2 an der Oberseite der Dachabdichtungsbahn (Fig. 1) erstrecken sich über die gesamte Länge derselben. Die bituminösen Streifen 2 selbst sind von einer Schmelzklebefolie 1a überdeckt, die ebenfalls streifenförmig ausgebildet ist. Jeder einzelne Streifen der Folie 1a überdeckt gerade einen bituminösen Streifen 2. Zwischen den bituminösen Streifen 2 liegt die Sandabstreuung 3 frei.

Durch die beschriebene Anordnung der Schmelzklebefolien 1a und 1b ist gewährleistet, daß diese beim Verlegen der Dachabdichtungsbahn problemlos abgeflämmt werden können. Das Abflämmen kann also nicht durch störende Feuchtigkeit beeinträchtigt werden.

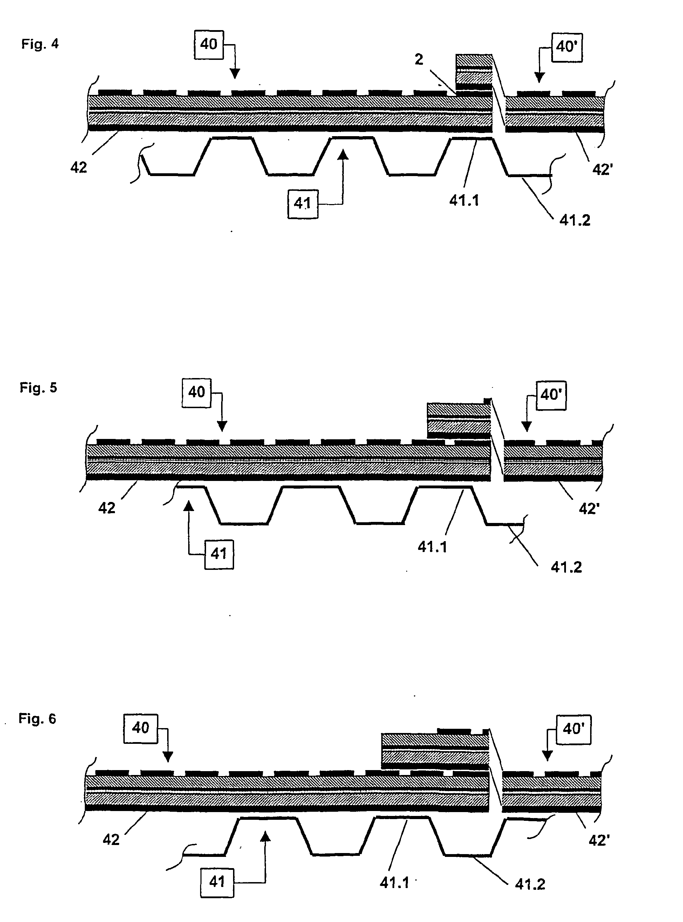

Die in Fig. 4 bis 6 dargestellte Ausführungsform einer Dachabdichtungsbahn ist jeweils auf einem Trapezblech 41 verlegt. Es sind jeweils zwei sich überlappende Dachabdichtungsbahnen 40 und 40' mit einer Breite von ca. 1 m dargestellt. Die Bahnen 40, 40' haben an der Unterseite eine vollflächige Schicht 42, 42' aus bituminösem Material und an der Oberseite Streifen 2 aus bituminösem Material mit einer Breite von jeweils etwa 8 cm.

Die Bahnen 40 und 40' überlappen sich im Bereich einer Hochsicke 41.1 des Trapezblechs 41. Die Breite des Überlappungsbereichs ist dabei abhängig von der relativen Lage der Bahn 40 auf dem Trapezblech sowie von der Breite der jeweiligen Hochsicke. Bei dem in Fig. 4 dargestellten Ausführungsbeispiel liegt die seitliche Begrenzung der Bahn 40 so, daß ein am Rand der Bahn 40 angeordneter Streifen 2 aus bituminösem Material mit einer Breite von ca. 8 cm genau über der Hochsicke 41.1 liegt. Die Bahn 40' ist mit der Standardüberlappung von ebenfalls 8 cm verlegt, d.h. die Bahn 40' überdeckt die Bahn 40 nur im Bereich des Streifens 2.

Bei den in Fig. 5 und 6 dargestellten Ausführungsbeispielen liegt die seitliche Begrenzung der Bahn 40 über einer Tiefsicke 41.2. Die Bahn 40' ist mit einer solchen Überlappung verlegt, daß die Bahn 40' den Bereich der Bahn 40 überdeckt, der den Bereich der Hochsicke 41.1 abdeckt. Die Überlappung hat hier eine Breite von etwa 16 cm (Fig. 5) bzw. von etwa 22 cm (Fig. 6).

Mit der in Fig. 4 bis 6 dargestellten Ausführungsform der Dachabdichtungsbahn kann stets eine hinreichend breite Schweißnaht zwischen sich überlappenden Bahnen hergestellt werden, welche mindestens 8 cm breit sein sollte, was der Breite der Streifen 2 entspricht.

## Patentansprüche

1. Dachabdichtungsbahn, bestehend zumindest aus einer Trägerschicht, mit zumindest auf einer Seite der Trägerschicht angeordneten, voneinander beabstandeten Streifen (2, 2') aus bituminösem Material, die voneinander durch eine Abstreuung (3, 3') getrennt sind, sowie einer das bituminöse Material überdeckenden schmelzbaren Folie (1a, 1b), **dadurch gekennzeichnet, daß** die Streifen (2, 2') aus bituminösem Material bei 50° C eine Penetrationstiefe zwischen etwa 120 und 170 und einen Erweichungspunkt zwischen etwa 100 °C und 110 °C haben, und
daß die schmelzbare Folie (1a, 1b) aus nicht miteinander verbundenen Streifen besteht, die parallel zu den Streifen (2, 2') aus bituminösem Material ausgerichtet sind.

2. Dachabdichtungsbahn nach Anspruch 1, **dadurch gekennzeichnet, daß** die Foliensteifen (1b) durch eine Schnittlinie (6) voneinander getrennt sind.

3. Dachabdichtungsbahn nach Anspruch 1 oder 2, **dadurch gekennzeichnet, daß** die Foliensteifen (1a) im wesentlichen nur das bituminöse Material (2) überdecken.

4. Dachabdichtungsbahn nach einem der Ansprüche 1 bis 3, mit an der Oberseite angeordneten Streifen (2) aus bituminösen Material, **dadurch gekennzeichnet, daß** sich sämtliche an der Oberseite angeordneten Streifen (2) aus bituminösem Material über die gesamte Länge der Dachabdichtungsbahn erstrecken.

5. Dachabdichtungsbahn nach einem der Ansprüche 1 bis 4, **dadurch gekennzeichnet, daß** die Streifen (2') aus bituminösem Material in Längsrichtung der Dachabdichtungsbahn unterbrochen sind.

6. Dachabdichtungsbahn nach einem der Anspüche 1 bis 5, **dadurch gekennzeichnet, daß** die bituminösen Streifen (2, 2') an der jeweiligen Bahnseite mindestens 50 % der Gesamtfläche der Bahn bedecken.

7. Dachabdichtungsbahn nach einem der Ansprüche 1 bis 6, **dadurch gekennzeichnet, daß** an einer Bahnseite angeordnete Streifen (2') aus bituminösem Material unterschiedlich breit sind.

8. Dachabdichtungsbahn nach einem der Ansprüche 1 bis 7, **dadurch gekennzeichnet, daß** die Oberfläche der Streifen aus bituminösem Material (2, 2') gerillt sind.

9. Dachabdichtungsbahn nach einem der Ansprüche 1 bis 8. **dadurch gekennzeichnet, daß** die Folie (1a, 1b) genadelt ist.

## Claims

1. A roof sealing strip, consisting of at least one carrier layer, comprising strips (2, 2') which are made of bituminous material, are arranged at least on one side of the carrier layer, are spaced from one another and are separated from one another by sanding (3, 3'), and of a meltable film (1a, 1b) which covers the bituminous material, **characterized in that** the strips (2, 2') of bituminous material have a penetration depth of between approximately 120 and 170 at 50°C and a softening point of between approximately 100°C and 110°C, and that the meltable film (1a, 1b) consists of strips which are not connected with each other and which are aligned parallel to the strips (2, 2') of bituminous material.

2. A roof sealing strip according to claim 1, **characterized in that** the film strips (1b) are separated from each other by a cutting line.

3. A roof sealing strip according to claim 1 or 2, **characterized in that** the film strips (1a) substantially only cover the bituminous material (2).

4. A roof sealing strip according to one of the claims 1 to 3, with strips (2) of bituminous material arranged on the upper side, **characterized in that** all strips (2) of bituminous material arranged on the upper side extend over the entire length of the roof sealing strip.

5. A roof sealing strip according to one of the claims 1 to 4, **characterized in that** the strips (2) of bituminous material are interrupted in the longitudinal direction of the roof sealing strip.

6. A roof sealing strip according to one of the claims 1 to 5, **characterized in that** the bituminous strips (2, 2') cover at least 50% of the total surface of the strip on the respective side of the strip.

7. A roof sealing strip according to one of the claims 1 to 6, **characterized in that** strips (2') of bituminous material arranged on one side of the strip are differently wide.

8. A roof sealing strip according to one of the claims 1 to 7, **characterized in that** the surface of the strips of bituminous material (2, 2') is grooved.

9. A roof sealing strip according to one of the claims 1 to 8, **characterized in that** the film (1a, 1b) is needled.

## Revendications

1. Lé d'étanchéité de toiture, composée au moins d'une couche support, avec des bandes (2, 2') de matériau bitumineux disposées sur au moins une face de la couche support, espacées les unes des autres et séparées entre eux par un grésage (3, 3'), et avec une feuille fusible (1a, 1b) recouvrant le matériau bitumineux, **caractérisé en ce que** les bandes (2, 2') de matériau bitumineux ont à 50°C une profondeur de pénétration comprise entre 120 et 170 environ et ont une température de ramollissement comprise entre 100°C et 110° C environ, et **en ce que** la feuille fusible (1a, 1b) est faite de bandes non reliées entre elles, qui sont orientées parallèlement aux bandes (2, 2') de matériau bitumineux.

2. Lé d'étanchéité de toiture selon la revendication 1, **caractérisé en ce que** les bandes de feuille (1b) sont séparées les unes des autres par une ligne de découpe (6).

3. Lé d'étanchéité de toiture selon la revendication 1 ou 2, **caractérisé en ce que** les bandes de feuille (1a) ne recouvrent pour l'essentiel que le matériau bitumineux (2).

4. Lé d'étanchéité de toiture selon l'une des revendications 1 à 3 avec des bandes (2) de matériaux bitumineux disposées sur la face supérieure, **caractérisé en ce que** toutes les bandes (2) de matériau bitumineux disposées sur la face supérieure s'étendent sur toute la longueur du lé d'étanchéité.

5. Lé d'étanchéité de toiture selon l'une des revendications 1 à 4, **caractérisé en ce que** les bandes (2') de matériau bitumineux sont interrompues dans le sens longitudinal du lé d'étanchéité de toiture.

6. Lé d'étanchéité de toiture selon l'une des revendications 1 à 5, **caractérisé en ce que** les bandes bitumineuses (2, 2') recouvrent sur la face correspondante du lé au moins 50 % de la surface totale du lé.

7. Lé d'étanchéité de toiture selon l'une des revendications 1 à 6, **caractérisé en ce que** les bandes (2') de matériau bitumineux disposées sur une face d'un lé ont des largeurs différentes.

8. Lé d'étanchéité de toiture selon l'une des revendications 1 à 7, **caractérisé en ce que** la surface des bandes de matériau bitumineux (2, 2') est rainurée.

9. Lé d'étanchéité de toiture selon l'une des revendications 1 à 8, **caractérisé en ce que** la feuille (1a, 1b) est aiguilletée.
